# FASCICULE DE BREVET EUROPEEN

(11) **EP 2 931 607 B1**
(45) Date de publication et mention de la délivrance du brevet: **20.11.2019**
(21) Numéro de dépôt: 13820811.1
(22) Date de dépôt: 12.12.2013
(51) Int. Cl.: B64D 29/08

(54) **ENSEMBLE PROPULSIF POUR AÉRONEF**
ANTRIEBSEINHEIT FÜR EIN FLUGZEUG
PROPULSION UNIT FOR AN AIRCRAFT

(30) Priorité: 12.12.2012 FR 1261960
(43) Date de publication de la demande: 21.10.2015
(73) Titulaire: Safran Nacelles, 76700 Gonfreville-l'Orcher (FR); Safran Aircraft Engines, 75015 Paris (FR)
(72) Inventeur: BOILEAU, Patrick, 31170 Tournefeuille (FR); CARUEL, Pierre, 76600 Le Havre (FR); ANCUTA, Carmen, 75013 Paris (FR); BEUTIN, Bruno, 91000 Evry (FR)
(74) Mandataire: Delorme, Nicolas
(86) Numéro de dépôt international: PCT/FR2013/053048
(87) Numéro de publication internationale: WO 2014/091162

(56) Documents cités:
- WO-A1-2012/140368
- FR-A1- 2 901 244
- FR-A1- 2 926 790

## Description

La présente invention concerne un ensemble propulsif pour aéronef comprenant un turboréacteur et une nacelle entourant le turboréacteur, et se rapporte plus précisément à un dispositif d'ouverture et de fermeture d'une structure interne de nacelle.

Un avion est mû par plusieurs turboréacteurs logés chacun dans une nacelle abritant également un ensemble de dispositifs d'actionnement annexes liés à son fonctionnement et assurant diverses fonctions lorsque le turboréacteur est en fonctionnement ou à l'arrêt. Ces dispositifs d'actionnement annexes comprennent notamment un système mécanique d'actionnement d'inverseurs de poussée.

Une nacelle présente généralement une structure tubulaire comprenant une entrée d'air en amont du turboréacteur, une section médiane destinée à entourer une soufflante du turboréacteur, une section aval abritant des moyens d'inversion de poussée et destinée à entourer la chambre de combustion du turboréacteur, et est généralement terminée par une tuyère d'éjection dont la sortie est située en aval du turboréacteur.

Les nacelles modernes, comme celle divulguée par le document FR2926790, sont destinées à abriter un turboréacteur double flux apte à générer par l'intermédiaire des pâles de la soufflante en rotation un flux d'air chaud (également appelé flux primaire) issu de la chambre de combustion du turboréacteur, et un flux d'air froid (flux secondaire) qui circule à l'extérieur du turboréacteur à travers un passage annulaire, également appelé veine. Une nacelle pour un tel moteur présente généralement une structure externe, dite Outer Fixed Structure (OFS), qui définit, avec une structure interne concentrique, dite Inner Fixed Structure (IFS), entourant le compartiment aval du turboréacteur, structure du moteur à proprement parler en arrière de la soufflante, la veine destinée à canaliser le flux d'air froid qui circule à l'extérieur du moteur.

Les flux primaire et secondaire sont éjectés du moteur par l'arrière de la nacelle. Chaque ensemble propulsif de l'avion est ainsi formé par une nacelle et un turboréacteur, et est suspendu à une structure fixe de l'avion, par exemple sous une aile ou sur le fuselage, par l'intermédiaire d'un pylône ou mât rattaché au moteur ou à la nacelle.

La structure interne de la nacelle est usuellement formée de deux demi-coquilles de forme sensiblement hémicylindrique, de part et d'autre d'un plan vertical longitudinal de symétrie de la nacelle.

Le compartiment aval du turboréacteur, constituant la zone « core » du turboréacteur, nécessite des visites périodiques de maintenance.

En effet, le compartiment aval du turboréacteur renferme en outre un boîtier d'accessoires (« accessory gearbox » en terminologie anglo-saxonne) situé à proximité du compresseur du turboréacteur. Ce boîtier comprend typiquement un ou plusieurs trains d'engrenages entraînés en rotation via l'arbre du compresseur sur lesquels sont couplés différents accessoires comme par exemple des générateurs électriques.

La zone « core » du turboréacteur renferme également la chambre de combustion du turboréacteur, en sortie du compresseur, dans laquelle est réalisé le mélange air/carburant, le carburant étant introduit dans la chambre par un injecteur (« fuel nozzle » en terminologie anglo-saxonne).

De tels équipements doivent être fréquemment contrôlés, ce qui nécessite de disposer d'un accès facile et rapide au compartiment aval du turboréacteur.

Pour cela, les demi-coquilles sont montées mobiles de manière à pouvoir se déployer entre une position de travail selon laquelle les demi-coquilles forment un carter du compartiment aval du turboréacteur, et une position de maintenance autorisant l'accès au turboréacteur.

En position de travail, les demi-coquilles sont maintenues en position de fermeture au moyen de verrous disposés le long d'une ligne de jonction située en partie inférieure, à « six heures ».

Selon une solution de l'art antérieur, les demi-coquilles sont montées pivotantes autour d'un axe longitudinal formant charnière en partie supérieure de l'inverseur, à « douze heures ».

Pour réaliser des opérations de maintenance du turboréacteur, il peut être nécessaire d'ouvrir la structure externe pour pouvoir ouvrir les demi-coquilles.

Dans le cas où la structure externe (OFS) est une structure de type « C-duct », c'est-à-dire que ladite structure est constituée de deux demi-capots montés pivotant sur des charnières positionnées en partie supérieure de la nacelle, l'accès au compartiment aval du turboréacteur est réalisé par l'ouverture des demi-capots de la structure externe puis par l'ouverture des demi-coquilles de la structure interne de la nacelle.

Lorsque le capot d'inverseur est du type « D-duct », c'est-à-dire lorsque les demi-capots de la structure externe sont reliés aux demi-coquilles correspondantes de la structure interne par des îlots de liaison, l'ouverture de la structure externe de la nacelle entraîne simultanément l'ouverture de la structure interne.

Dans le cas d'une structure externe de type « O-duct », c'est-à-dire lorsque le capot d'inverseur comprend un unique capot annulaire, s'étendant de part et d'autre d'un mât de suspension auquel sont rapportés la nacelle et le turboréacteur, la solution précitée selon laquelle les demi-coquilles de la structure interne sont pivotantes autour de charnières est incompatible.

Afin de permettre une ouverture de la structure interne de la nacelle lorsque la structure externe est fixe ou réalisée par un capot de type « O-duct », on connaît une première solution de l'art antérieur, décrite dans le brevet américain numéro 4 920 744.

Selon cette réalisation, l'accès au compartiment aval du turboréacteur est assuré par une première opération visant à déplacer les demi-coquilles vers l'aval de la nacelle, de façon à dégager les demi-coquilles de la structure externe fixe de la nacelle puis par une deuxième opération visant à entraîner les demi-coquilles en rotation autour d'un axe parallèle à l'axe longitudinal de la nacelle, par l'intermédiaire de bielles télescopiques.

Un inconvénient de cette solution est lié à la complexité du montage et de la cinématique d'ouverture, et le temps d'accès aux zones du turboréacteur qui nécessitent une maintenance fréquente est relativement long.

Une autre solution décrite dans la demande de brevet français enregistrée sous le numéro 07/01059 et appartenant au demandeur permet de résoudre en partie les inconvénients précités de l'art antérieur.

La nacelle divulguée par cette demande comprend une structure interne et une structure externe agencées pour former un canal d'écoulement du flux d'air secondaire, la structure interne entourant le turboréacteur et étant équipée de moyens de déplacement en translation le long d'un système rail/glissière sensiblement parallèle à l'axe longitudinal de la nacelle, et permettant un dégagement du compartiment aval du turboréacteur.

Cette solution est très avantageuse par rapport à l'art antérieur en ce qu'elle limite la cinématique d'ouverture de la structure interne.

Toutefois, un inconvénient de ce type de structure est par exemple identifiable lorsque le capotage externe de la nacelle est fixe. En effet, dans un tel cas, la translation de la structure interne vers l'aval ne permet pas un accès aisé à la zone « core » du turboréacteur.

La présente invention vise à résoudre les inconvénients de l'art antérieur précités, en proposant une nacelle permettant un accès aisé et rapide au compartiment aval du turboréacteur, tout en limitant le nombre d'interfaces nécessaires au passage d'une position de travail à une position de maintenance et en simplifiant la cinématique d'ouverture et de fermeture de la structure interne de la nacelle.

En outre, la présente invention permet de passer alternativement entre une position de travail et une position de maintenance de la structure interne de la nacelle pour une nacelle de type « C-duct » ou « O-duct ».

A cet effet, la présente invention se rapporte à un ensemble propulsif pour aéronef comprenant :
- un turboréacteur de type double flux,
- une nacelle entourant le turboréacteur, ladite nacelle comprenant une structure aval comprenant une structure externe qui définit, avec une structure interne concentrique entourant un compartiment aval du turboréacteur, un canal annulaire d'écoulement, la structure interne étant réalisée sous la forme de deux demi-parties annulaires,
- des moyens de déplacement et de guidage d'au moins l'une des deux demi-parties, conformés pour déplacer la demi-partie alternativement entre une position de travail dans laquelle la demi-partie forme une coquille autour du compartiment aval du turboréacteur, et une position de maintenance dans laquelle la demi-partie découvre au moins partiellement ledit compartiment aval du turboréacteur, lesdits moyens de déplacement et de guidage comprenant :
   au moins un système rail/glissière assurant un guidage en translation de la demi-partie, alternativement entre l'amont et l'aval de la nacelle, et
   au moins une bielle reliée d'une part à la demi-partie et d'autre part au turboréacteur,
la demi-partie étant montée pivotante sur le système rail/glissière, ledit ensemble propulsif étant remarquable en ce que le système rail/glissière est conformé pour éloigner radialement par rapport à un axe longitudinal de la nacelle au moins une portion de la demi-partie par laquelle la demi-partie est montée pivotante sur le système rail/glilssière, lors d'un déplacement de la demi-partie depuis l'amont vers l'aval de la nacelle, et en ce que ladite bielle est conformée pour entraîner en rotation la demi-partie autour d'un axe selon lequel s'étend un rail de guidage du système rail/glissière, simultanément lors du déplacement de la demi-partie le long dudit rail de guidage.

Ainsi, en prévoyant des moyens de déplacement de chaque demi-partie combinant un système rail/glissière avec une bielle reliant chaque demi-partie au turboréacteur et conformée pour entraîner en rotation de chaque demi-partie autour dudit rail, on réalise simultanément une translation et une rotation des demi-parties, ce qui permet avantageusement, grâce à un système simple de conception, de réduire considérablement le temps de passage d'une position de travail à une position de maintenance.

Le système rail-glissière assure la translation de la structure interne depuis une position amont vers une position aval du turboréacteur, ce qui permet un dégagement de la portion amont du compartiment aval du turboréacteur. De plus, le fait que le système rail-glissière permette un éloignement radial de la demi-partie par rapport à l'axe longitudinal de la nacelle permet d'éloigner chaque demi-partie des volumes du turboréacteur.

Le déplacement en translation depuis l'amont vers l'aval de la nacelle entraîne de concert la bielle en mouvement, ladite bielle étant conformée pour entraîner en rotation la demi-partie autour dudit rail.

Le mouvement de rotation de chaque demi-partie autour du rail de guidage associé permet de dégager la portion inférieure aval du turboréacteur.

La portion amont du compartiment aval du turboréacteur et la portion inférieure aval du turboréacteur sont ainsi totalement dégagées grâce à la translation de chaque demi-partie depuis l'amont vers l'aval de la nacelle, ladite translation entraînant la rotation de chaque demi-partie autour dudit rail.

Selon des caractéristiques toutes optionnelles de la présente invention :
- la bielle comprend une première extrémité montée en liaison rotule sur une portion inférieure de la demi-partie et une deuxième extrémité montée pivotante sur un point d'attache fixe du turboréacteur ;
- la bielle est conformée pour supporter la demi-partie dans une position de maintenance, ce qui permet d'éviter de prévoir un dispositif annexe pour supporter les demi-parties en position ouverte de maintenance ;
- le rail de guidage du système rail/glissière est solidaire du compartiment aval du turboréacteur ;
- l'axe selon lequel s'étend le rail de guidage est sensiblement non-colinéaire à un axe longitudinal de la nacelle ;
- le rail de guidage présente une extrémité située à proximité d'un mât de suspension destiné à supporter ledit ensemble propulsif ;
- alternativement, le rail de guidage est supporté par un mât de suspension destiné à supporter ledit ensemble propulsif ;
- le système rail/glissière comprend au moins une glissière supportée par ladite portion de la demi-partie et conformée pour coulisser le long du rail de guidage ;
- ladite portion de la demi-partie est située dans une zone supérieure amont de la demi-partie ;
- l'angle de rotation de la demi-partie autour de l'axe selon lequel s'étend le rail est préférentiellement compris entre 0° et 30°.

Selon un deuxième mode de réalisation de l'ensemble propulsif, les moyens de déplacement et de guidage d'au moins l'une des deux demi-parties comprennent un deuxième système rail/glissière comportant :
- un rail solidaire du compartiment aval du turboréacteur, sensiblement diamétralement opposé à un mât de suspension destiné à supporter l'ensemble propulsif, et
- une glissière mobile en translation le long du rail lors de l'activation de moyens d'actionnement,
la glissière supportant des moyens pour déplacer au moins une dite bielle conformée pour entraîner en rotation la demi-partie autour du rail de guidage du premier système rail/glissière, lors de l'activation desdits moyens d'actionnement.

Ainsi, grâce à ce mode de réalisation, l'ouverture relative des bielles conformées pour entraîner en rotation la demi-partie autour du rail est sensiblement augmentée par rapport à celle obtenue grâce au premier mode de réalisation.

Plus précisément, les moyens pour déplacer au moins une dite bielle comprennent au moins une contre-bielle dont l'une de ses extrémités est montée pivotante sur la glissière et l'autre de ses extrémités est montée pivotante sur ladite bielle.

Le système rail/glissière réalisé selon le deuxième mode de réalisation permet ainsi de manière avantageuse de réduire les efforts supportés par les bielles conformées pour entraîner en rotation la demi-partie autour du rail.

En outre, selon une variante commune aux deux modes de réalisation de l'ensemble propulsif selon l'invention, le compartiment aval du turboréacteur est équipé d'un boîtier d'accessoires comprenant deux bras définissant un « V ».

Selon une réalisation, le rail de guidage du système rail/glissière est conformé de façon à ce que l'axe selon lequel il s'étend est non-colinéaire à l'axe longitudinal de la nacelle et s'éloigne radialement de ce dernier en progressant vers l'aval.

D'autres caractéristiques et avantages de la présente invention apparaîtront à la lecture de la description qui va suivre et à l'examen des figures ci-annexées, dans lesquelles :
- la figure 1 est une vue en coupe longitudinale d'un ensemble propulsif 1 ;
- la figure 2 représente l'ensemble propulsif selon l'invention vu de l'arrière ;
- la figure 3 illustre en vue de côté l'ensemble propulsif ;
- la figure 4 est une coupe transversale d'un premier mode de réalisation du système rail/glissière ;
- la figure 5 est une coupe transversale d'un deuxième mode de réalisation du système rail/glissière ;
- la figure 6 est représente l'ensemble propulsif en vue de dessus ;
- les figures 7 à 9 illustrent schématiquement selon différents points d'observation l'ensemble propulsif ;
- les figures 10 à 13 illustrent l'ensemble propulsif réalisé conformément à un deuxième mode de réalisation de l'invention.

Sur l'ensemble des figures, des références identiques ou analogues désignent des organes ou ensembles d'organes identiques ou analogues.

Par ailleurs, les termes « amont » et « aval » sont définis par référence au sens d'écoulement du flux d'air dans la nacelle en fonctionnement jet direct, l'amont de la nacelle correspondant à une partie de la nacelle par laquelle le flux pénètre, et l'aval correspondant à une zone d'éjection dudit flux d'air.

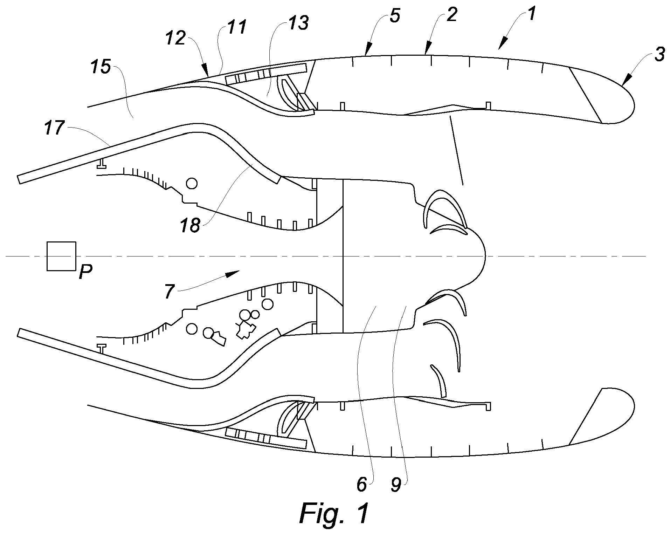

On se réfère à la figure 1, illustrant un ensemble propulsif 1 en coupe longitudinale, ledit ensemble comprenant une nacelle entourant un turboréacteur.

L'ensemble propulsif 1 comprend une nacelle 2 comprenant une structure amont d'entrée d'air 3, une structure médiane 5 entourant un compartiment amont 6 d'un turboréacteur double flux 7, ledit compartiment étant constitué par une soufflante 9, et une structure aval 11 comportant de manière connue en soi une structure externe 12, dite OFS, abritant des moyens d'inversion de poussée 13 et qui définit un canal annulaire d'écoulement 15 avec une structure interne 17 (IFS) concentrique entourant un compartiment aval 18 du turboréacteur 7 s'étendant en arrière de la soufflante 9, et constituant la zone moteur à proprement parler (encore appelée zone « core »).

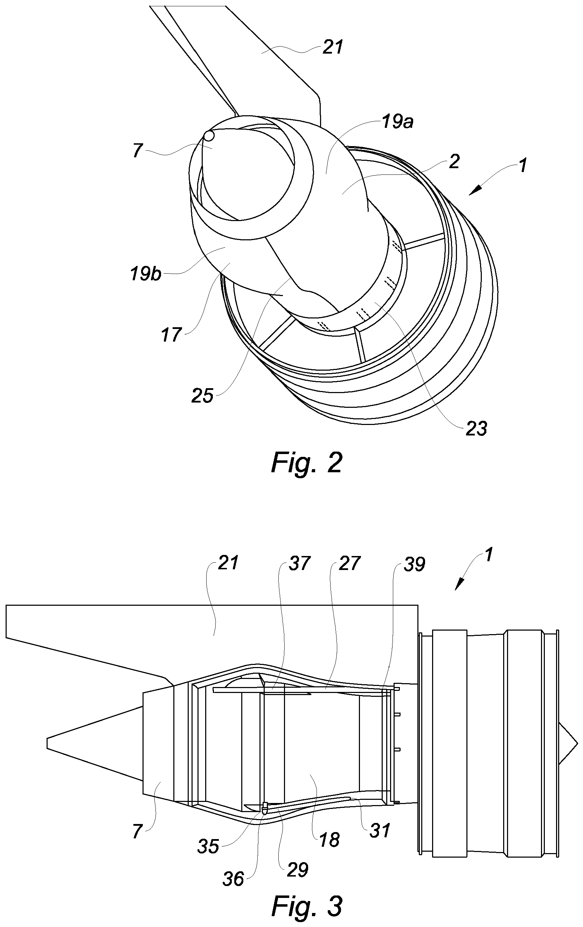

La structure interne 17 de nacelle, visible sur la figure 2 illustrant l'ensemble propulsif 1 vu depuis l'aval de la nacelle, est formée de deux demi-coquilles ou demi-parties 19a et 19b annulaires, de forme sensiblement hémicylindrique, disposées de part et d'autre d'un plan vertical longitudinal P de symétrie de la nacelle (visible sur la figure 1).

Dans la présente demande, on entend par « position de travail » une position de la structure interne de la nacelle selon laquelle les demi-parties 19a et 19b forment une coquille autour du compartiment aval du turboréacteur.

Cette position est adoptée pour toutes les phases de fonctionnement de la nacelle et/ou du turboréacteur, c'est-à-dire toutes les phases autres que celles de maintenance du turboréacteur.

La nacelle 2 et le turboréacteur 7 sont rapportés à une aile de l'avion (non représentée) par l'intermédiaire d'un mât de suspension 21, les structures amont et médiane, ainsi que la structure externe de la structure aval de la nacelle 2 ayant été ôtées pour plus de visibilité des demi-parties 19a et 19b de la structure interne 17 de la nacelle.

En position de travail, la structure interne 17 de la nacelle est fixée en amont sur un cadre 23 solidaire du turboréacteur 7, et présentant une structure de forme annulaire entourant concentriquement le turboréacteur 7. Les demi-parties 19a et 19b sont quant à elles maintenues entre elles en position de fermeture le long d'une ligne de jonction 25 située en partie inférieure, par exemple « à six heures », par un système classique de verrouillage bien connu de l'homme du métier, qui ne sera par conséquent pas d'avantage décrit dans la présente demande.

Ces deux demi-parties 19a et 19b peuvent également être reliées axialement à l'avant au turboréacteur par l'intermédiaire de verrous classiques.

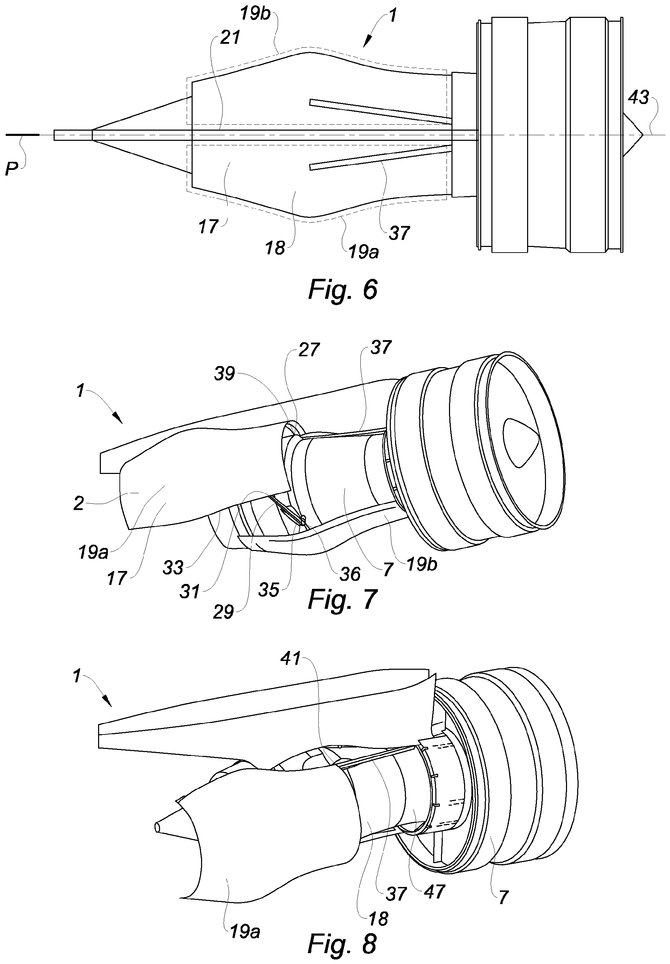

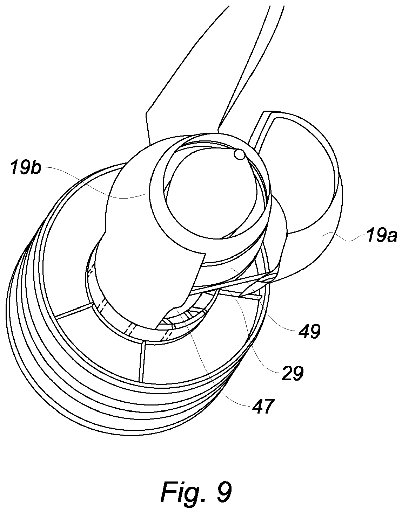

En se référant à la figure 3, illustrant l'ensemble propulsif 1 en vue de côté, les structures amont, médiane et aval de la nacelle ayant été ôtées pour plus de visibilité, l'ensemble propulsif 1 comprend des moyens de déplacement de chaque demi-partie, conformés pour déplacer la demi-partie alternativement entre la position de travail telle que représentée et une position de maintenance (représentée sur les figures 7 à 9) dans laquelle la demi-partie découvre au moins partiellement le compartiment aval 18 du turboréacteur.

Les moyens de déplacement comprennent un système rail/glissière 27 et une bielle 29 dont une première extrémité 31 est montée en liaison rotule sur une portion inférieure 33 de la demi-partie 19a (visible sur la figure 7 par exemple) et une deuxième extrémité 35 est montée pivotante sur un point d'attache fixe 36 du turboréacteur 7.

La bielle 29 est conformée pour supporter la demi-partie 19 en position ouverte lorsqu'elle se trouve en position de maintenance. Le présent exemple de réalisation illustre une bielle unique par demi-partie. Toutefois, si l'homme du métier y trouve un intérêt particulier, il peut bien entendu être envisagé de relier chaque demi-partie au turboréacteur par l'intermédiaire d'une pluralité de bielles.

Le système rail/glissière 27 comprend quant à lui un rail de guidage 37 monté sur le compartiment aval 18 du turboréacteur 7, dont une de ses extrémités est située à proximité du mât de suspension 21, et une glissière 39 conformée pour coulisser le long du rail de guidage 37.

Alternativement, le rail de guidage 37 peut être directement supporté par le mât de suspension 21.

La glissière est de manière préférée prévue au niveau d'une portion supérieure amont 41 de la demi-partie 19a (visible sur les figures 7 et 8 par exemple) de la structure interne de la nacelle, à l'intérieur de ladite structure interne.

A titre illustratif et non limitatif, la longueur du rail de guidage 37 est de l'ordre de 1400 millimètres. Bien évidemment, cette longueur de rail peut être amenée à être adaptée en fonction de la longueur de la structure interne de la nacelle et/ou du turboréacteur.

En outre, les demi-parties 19a, 19b peuvent comprendre des centreurs (non représentés) permettant de positionner de manière précise les demi-parties autour du turboréacteur, de façon à limiter les jeux dus au montage, et ainsi d'assurer la continuité aérodynamique à l'intérieur du canal annulaire d'écoulement du flux d'air secondaire.

Par ailleurs, les centreurs sont dimensionnés pour supporter les contraintes liées au verrouillage et assurent une reprise des efforts de pression et de vibration intervenant lorsque l'ensemble propulsif est en fonctionnement. Ainsi, les centreurs permettent également de limiter les efforts sur le système rail/glissière, et le dimensionnement dudit système rail/glissière est optimisé en ce qu'il est principalement conçu de façon à permettre l'ouverture et la fermeture des demi-parties 19a, 19b du turboréacteur.

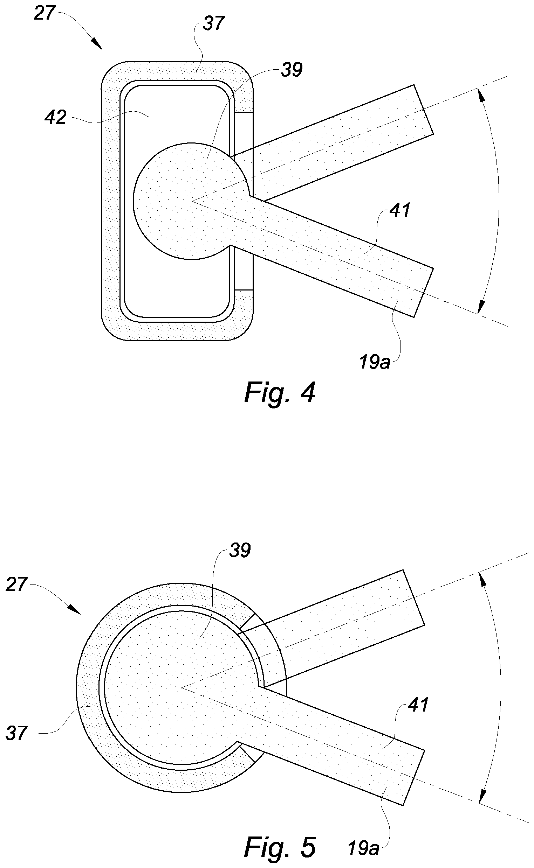

La figure 4 représente schématiquement en coupe transversale un premier mode de réalisation du système rail/glissière 27.

Le rail 37 présente une section sensiblement rectangulaire, et la glissière 39 comprend une garniture 42 coulissant le long de la partie interne du rail 37, sur laquelle est montée pivotante la portion supérieure amont 41 de la demi-partie 19a, autour d'un axe longitudinal du rail 37.

En variante, comme représenté sur la figure 5, le rail présente une section sensiblement circulaire, et la glissière 39 est constituée uniquement par la portion supérieure amont 41 de la demi-partie 19a, adaptée pour à la fois coulisser le long de la partie interne du rail 37 et pour pivoter autour de l'axe longitudinal du rail.

Quelles que soient les configurations de système rail/glissière retenues, le système rail/glissière est conformé pour autoriser un débattement angulaire de la demi-partie 19a autour de l'axe longitudinal du rail 37 de l'ordre de 30°.

D'une manière générale, le débattement angulaire de la demi-partie 19a autour de l'axe longitudinal du rail 37 est limité par la courbure des lignes internes définissant la coquille du turboréacteur. Il est ainsi tout à fait envisageable de prévoir un angle d'ouverture supérieur à 30° en réduisant la courbure des lignes internes.

Selon l'invention, et comme représenté sur la figure 6 illustrant schématiquement l'ensemble propulsif 1 en vue de dessus, le rail de guidage 37 du système rail/glissière, monté sur le compartiment aval 18 du turboréacteur, à proximité du mât de suspension 21, forme un angle non nul avec un axe longitudinal 43 du turboréacteur (ou de la nacelle concentrique), c'est-à-dire que le rail de guidage est sensiblement oblique par rapport audit axe longitudinal.

De tels moyens de déplacement, constitués par le système rail/glissière 27 et par la bielle, sont également prévus pour réaliser le déplacement de la demi-partie 19b de la structure interne 17 de la nacelle. Les moyens de déplacement de la demi-partie 19b sont sensiblement symétriques aux moyens de déplacement de la demi-partie 19a par rapport au plan vertical longitudinal P de symétrie de la nacelle.

On se réfère à présent aux figures 7 à 9, illustrant schématiquement selon différents points d'observation l'ensemble propulsif 1, les sections amont, médiane et la structure externe de la structure aval de la nacelle ayant été ôtées pour plus de visibilité.

Sur ces trois vues, la demi-partie 19a est représentée en position de maintenance, et la demi-partie 19b est représentée en position de travail.

Le passage alternatif d'une position de travail à une position de maintenance de la demi-partie 19a est réalisé comme suit, et la description qui en est faite s'applique mutatis mutandis pour le passage alternatif d'une position de travail à une position de maintenance de la demi-partie 19b.

On déplace la demi-partie 19a depuis l'amont de la nacelle vers l'aval, le long du rail de guidage 37 solidaire du turboréacteur, par l'intermédiaire de la glissière solidaire de la partie supérieure amont 41 de la demi-partie 19a.

La mise en mouvement de la demi-partie peut être réalisée manuellement ou par l'intermédiaire de moyens d'actionnement, par exemple électriques, mécaniques, hydrauliques ou pneumatiques, actionnant des vérins reliés à la demi-partie 19a.

Le rail de guidage 37 est, comme précédemment décrit, non-colinéaire à l'axe longitudinal 43 de la nacelle, ce qui a pour effet d'éloigner radialement la demi-partie 19a par rapport audit axe longitudinal lors du déplacement de la demi-partie depuis l'amont vers l'aval de la nacelle.

La portion inférieure 33 de la demi-partie 19a reçoit la première extrémité 31 de la bielle 29, montée en liaison rotule. La deuxième extrémité 35 de la bielle 29 est quant à elle montée pivotante sur le point d'attache fixe 36 du turboréacteur 7.

Le déplacement en translation depuis l'amont vers l'aval de la nacelle le long du rail de guidage 37 entraîne le pivotement de la bielle autour du point d'attache fixe 36 du turboréacteur 7. L'extrémité 31 de la bielle 29 entraîne alors de concert la rotation de la demi-partie 19a autour du rail de guidage 37.

Ainsi, la portion amont 47 du compartiment aval 18 du turboréacteur 7 et la portion inférieure aval 49 du turboréacteur 7 sont totalement dégagées simultanément grâce à l'étape de translation de la demi-partie 19a qui entraîne la rotation de ladite demi-partie autour dudit rail.

Le mouvement de translation dans une direction non-colinéaire à l'axe longitudinal de la nacelle permet l'éloignement des demi-parties des volumes du turboréacteur, dégageant la portion amont 47 du compartiment aval du turboréacteur, et le mouvement de rotation des demi-parties autour du rail de guidage permet l'ouverture de la demi-partie, dégageant la portion inférieure aval 49 du turboréacteur.

Un tel dégagement de la portion inférieure aval du turboréacteur permet notamment l'intégration d'un boîtier d'accessoires (« accessory gearbox » en terminologie anglo-saxonne).

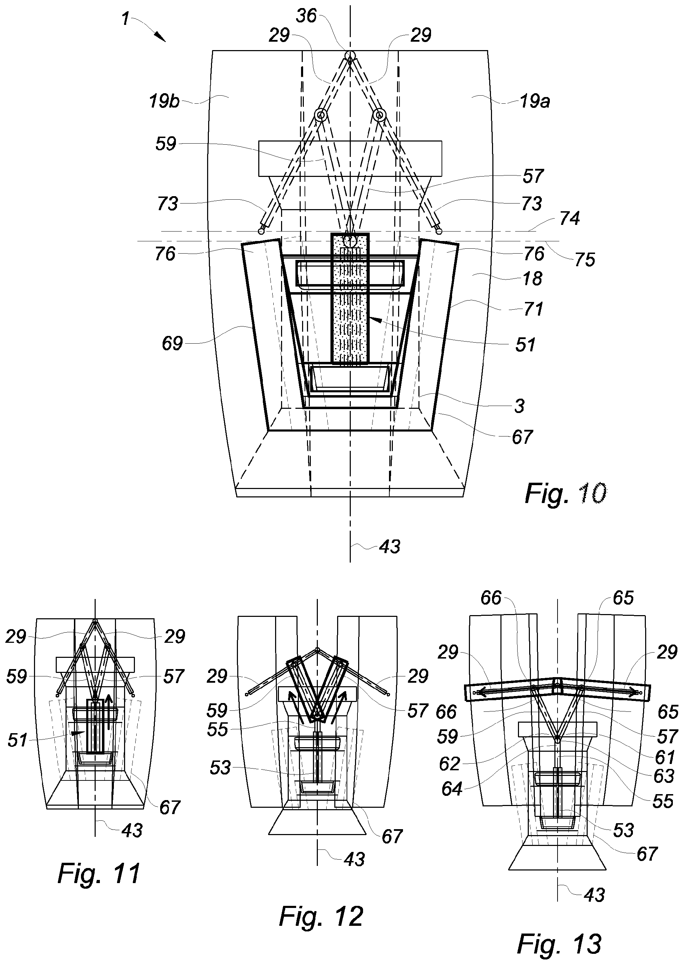

Selon un deuxième mode de réalisation de l'ensemble propulsif 1, représenté aux figures 10 à 13, le compartiment aval 18 du turboréacteur 3 comprend en outre un deuxième système rail/glissière 51.

Le système rail/glissière 51 est de préférence monté « à six heures », c'est-à-dire dans la zone diamétralement opposée au mât de suspension 21 recevant le système rail/glissière 27 précédemment décrit. Le système rail/glissière 51 comprend un rail 53 monté sur le turboréacteur 7, et reçoit une glissière 55 montée coulissante dans le rail 53. L'axe longitudinal du système rail/glissière 51 est sensiblement colinéaire à l'axe longitudinal 43 de la nacelle.

Deux contre-bielles 57, 59 relient la glissière 55 et les bielles 29 reliant les demi-parties 19a, 19b et le point d'attache fixe 36 du turboréacteur 7. Les extrémités 61, 62 des contre-bielles 57, 59 sont montées pivotantes sur un axe sensiblement transverse à l'axe longitudinal 43 de la nacelle, sensiblement disposé à proximité de l'extrémité 64 de la glissière 55, tandis que les extrémités 65, 66 des contre-bielles 57, 59 sont montées pivotantes sur les bielles 29.

La cinématique d'ouverture des demi-parties 19a, 19b est la suivante :
Le passage alternatif entre une position de travail selon laquelle les demi-parties 19a, 19b forment une coquille autour du compartiment aval du turboréacteur, et une position de maintenance selon laquelle les demi-parties 19a, 19b découvrent au moins partiellement le compartiment aval 18 du turboréacteur 7, est effectué en déplaçant les demi-parties 19a, 19b vers l'aval le long du rail 37 du système rail/glissière 27.

Comme précédemment décrit, le rail de guidage 37, non-colinéaire à l'axe longitudinal 43 de la nacelle, permet un éloignement radial des demi-parties 19a, 19b par rapport à l'axe longitudinal 43 de la nacelle lors du déplacement des demi-parties depuis l'amont vers l'aval de la nacelle.

Le déplacement des demi-parties 19a, 19b est cette fois-ci obtenu manuellement ou par l'activation de moyens d'actionnement électriques, mécaniques, hydrauliques ou pneumatiques actionnant des vérins (non représentés) solidaires de la glissière 55.

Le mouvement de translation, depuis l'amont vers l'aval de la nacelle, de la glissière 55 le long du rail 53 entraîne simultanément le déplacement vers l'aval des demi-parties 19a, 19b et le pivotement des contre-bielles 57, 59 autour d'un axe sensiblement transverse à l'axe longitudinal 43 de la nacelle (voir la figure 12).

Le pivotement des contre-bielles 57, 59, montées pivotantes sur les bielles 29, entraîne le pivotement des bielles 29, entraînant elles-mêmes la rotation des demi-parties 19a, 19b autour du rail de guidage 37.

Comme précédemment, la portion amont 47 du compartiment aval 18 du turboréacteur 7 et la portion inférieure aval 49 du turboréacteur 7 sont totalement dégagées lors de l'ouverture des demi-parties 19a, 19b.

Le système rail/glissière 51 et les contre-bielles 57, 59, décrits en référence au deuxième mode de réalisation de l'invention, permettent toutefois d'augmenter l'ouverture relative des demi-parties 19a, 19b par rapport à celle obtenue grâce au premier mode de réalisation.

En effet, l'ensemble comprenant le système rail/glissière 51, les contre-bielles 57, 59 et les bielles 29, constitue un système d'ouverture assimilable à un « système parapluie », permettant d'une part d'augmenter l'ouverture relative des bielles 29 tout en limitant les efforts subis par les bielles 29 lors de l'opération d'ouverture des demi-parties 19a, 19b.

Comme on vient de le voir, en augmentant de la sorte l'ouverture relative des bielles 29, on limite les risques de contact entre les bielles 29 et le compartiment aval du turboréacteur.

Cela permet en outre de faciliter l'intégration d'un boîtier d'accessoires. Comme représenté schématiquement aux figures 10 à 13, le compartiment aval du turboréacteur est équipé d'un boîtier d'accessoires 67 dit « en V », constitué par exemple d'un moyeu sur lequel sont montés deux bras 69, 71 supportant des équipements.

En position de travail, position selon laquelle les demi-parties 19a, 19b forment coquille autour du compartiment aval du turboréacteur, les extrémités 73 des bielles 29 définissent un plan transversal 74 (par rapport à l'axe longitudinal 43 de la nacelle) sensiblement en retrait par rapport au plan transversal 75 défini par les extrémités aval 76 des bras 69, 71, ce qui permet de réduire les risques de contact entre les bielles 29 et le boîtier 67.

Ainsi, le deuxième mode de réalisation est notamment avantageux par rapport au premier en ce que le compartiment aval 18 du turboréacteur 3 peut à présent supporter un boîtier d'accessoire 67 « en V », sans que les demi-parties 19a, 19b ne viennent butter contre le boîtier d'accessoires 67 lors de leur ouverture.

Un tel boîtier d'accessoires 67 « en V » permet notamment d'optimiser les performances des turboréacteurs, par rapport à un boîtier d'accessoires présentant une autre forme.

La présente invention permet, contrairement à l'état de la technique, un dégagement des deux portions du compartiment aval 18 du turboréacteur grâce à une seule étape cinématique, celle de la translation de la demi-partie le long du rail 37, ce qui simplifie considérablement le mécanisme de passage d'une position de travail vers une position de maintenance, et ce qui par conséquent diminue largement le temps d'accès au turboréacteur.

Par ailleurs, il doit bien être compris que le passage d'une position de travail à une position de maintenance de la structure interne de la nacelle n'est pas nécessairement lié à un mode de réalisation de la structure externe.

A cet effet, la description qui a été faite s'applique à des structures externes de nacelles de type O-duct ou C-duct.

En outre, l'ouverture de la structure interne peut également être réalisée simultanément à l'étape d'ouverture de la structure externe de nacelle, par l'entremise de bielles d'entraînement reliant la structure externe à la structure interne.

Enfin, comme il va de soi, l'invention ne se limite pas aux seules formes de réalisation de cet ensemble propulsif, décrites ci-dessus uniquement à titre d'exemples illustratifs, mais elle embrasse au contraire toutes les variantes faisant intervenir les équivalents techniques des moyens décrits ainsi que leurs combinaisons si celles-ci entrent dans le cadre de l'invention telle que définie aux revendications.

## Revendications

1. Ensemble propulsif (1) pour aéronef comprenant :
- un turboréacteur (7) de type double flux,
- une nacelle (2) entourant le turboréacteur (7), ladite nacelle comprenant une structure aval (11) comprenant une structure externe (12) qui définit, avec une structure interne (17) concentrique entourant un compartiment aval (18) du turboréacteur (7), un canal annulaire (15) d'écoulement, la structure interne (17) étant réalisée sous la forme de deux demi-parties (19a, 19b) annulaires,
- des moyens de déplacement (27, 29, 51 , 57, 59) et de guidage d'au moins l'une des deux demi-parties (19a, 19b), conformés pour déplacer la demi-partie (19a, 19b) alternativement entre une position de travail dans laquelle la demi-partie (19a, 19b) forme une coquille autour du compartiment aval (18) du turboréacteur, et une position de maintenance dans laquelle la demi-partie (19a, 19b) découvre au moins partiellement ledit compartiment aval du turboréacteur, lesdits moyens de déplacement et de guidage comprenant :
au moins un système rail/glissière (27) assurant un guidage en translation de la demi-partie, alternativement entre l'amont et l'aval de la nacelle, et
au moins une bielle (29) reliée d'une part à la demi-partie (19a, 19b) et d'autre part au turboréacteur (7),
la demi-partie (19a, 19b) étant montée pivotante sur le système rail/glissière (27),
ledit ensemble propulsif étant **caractérisé en ce que** le système rail/glissière (27) est conformé pour éloigner radialement par rapport à un axe longitudinal (43) de la nacelle au moins une portion (41) de la demi-partie (19a, 19b) par laquelle la demi-partie est montée pivotante sur le système rail/glissière (27), lors d'un déplacement de la demi-partie (19a, 19b) depuis l'amont vers l'aval de la nacelle, et **en ce que**) ladite bielle (29) est conformée pour entraîner en rotation la demi-partie autour d'un axe selon lequel s'étend un rail de guidage (37) du système rail/glissière (27), simultanément lors du déplacement de la demi-partie le long dudit rail de guidage.

2. Ensemble propulsif (1) selon la revendication 1 , **caractérisé en ce que** la bielle (29) comprend une première extrémité (31) montée en liaison rotule sur une portion inférieure (33) de la demi-partie (19a, 19b) et une deuxième extrémité (35) montée pivotante sur un point d'attache fixe (36) du turboréacteur (7).

3. Ensemble propulsif (1) selon l'une quelconque des revendications 1 ou 2, **caractérisé en ce que** la bielle (29) est conformée pour supporter la demi-partie (19a, 19b) dans une position de maintenance.

4. Ensemble propulsif (1) selon l'une quelconque des revendications 1 à 3, **caractérisé en ce que** le rail de guidage du système rail/glissière (27) est solidaire du compartiment aval (18) du turboréacteur (7).

5. Ensemble propulsif (1) selon l'une quelconque des revendications 1 à 4, **caractérisé en ce que** l'axe selon lequel s'étend le rail de guidage (37) est sensiblement non-colinéaire à un axe longitudinal (43) de la nacelle.

6. Ensemble propulsif (1) selon l'une quelconque des revendications 1 à 5, **caractérisé en ce que** le rail de guidage (37) présente une extrémité située à proximité d'un mât de suspension (21) destiné à supporter ledit ensemble propulsif (1).

7. Ensemble propulsif (1) selon l'une quelconque des revendications 1 à 6, **caractérisé en ce que** le rail de guidage (37) est supporté par un mât de suspension (21) destiné à supporter ledit ensemble propulsif (1).

8. Ensemble propulsif (1) selon l'une quelconque des revendications 1 à 7, **caractérisé en ce que** le système rail/glissière (27) comprend au moins une glissière (39) supportée par ladite portion (41) de la demi-partie (19a, 19b) et conformée pour coulisser le long du rail de guidage (37).

9. Ensemble propulsif (1) selon la revendication 8, **caractérisé en ce que** ladite portion (41) de la demi-partie (19a, 19b) est située dans une zone supérieure amont de la demi-partie.

10. Ensemble propulsif (1) selon l'une quelconque des revendications 1 à 9, **caractérisé en ce que** l'angle de rotation de la demi-partie (19) autour de l'axe selon lequel s'étend le rail (37) est préférentiellement compris entre 0° et 30°.

11. Ensemble propulsif (1) selon l'une quelconque des revendications 1 à 10, **caractérisé en ce que** lesdits moyens de déplacement et de guidage d'au moins l'une des deux demi-parties (19a, 19b) comprennent un deuxième système rail/glissière (51) comportant : - un rail (53) solidaire du compartiment aval (18) du turboréacteur (7), sensiblement diamétralement opposé à un mât de suspension (21) destiné à supporter l'ensemble propulsif (1), et
- une glissière (55) mobile en translation le long du rail (53) lors de l'activation de moyens d'actionnement,
la glissière (55) supportant des moyens pour déplacer au moins une dite bielle (29) conformée pour entraîner en rotation la demi-partie (19a, 19b) autour du rail de guidage (37) du premier système rail/glissière (27), lors de l'activation desdits moyens d'actionnement.

12. Ensemble propulsif (1) selon la revendication 11, **caractérisé en ce que** les moyens pour déplacer au moins une dite bielle (29) comprennent au moins une contre-bielle (57, 59) dont l'une de ses extrémités est montée pivotante sur la glissière (55) et l'autre de ses extrémités est montée pivotante sur ladite bielle (29).

13. Ensemble propulsif (1) selon l'une quelconque des revendications 11 à 12, **caractérisé en ce que** le compartiment aval (18) du turboréacteur (3) est équipé d'un boîtier d'accessoires (67)comprenant deux bras (69, 71) définissant un "V".

14. Ensemble propulsif (1) selon l'une quelconque des revendications 1 à 13, **caractérisé en ce que** le rail de guidage (37) du système rail/glissière (27) est conformé de façon à ce que l'axe selon lequel il s'étend est non-colinéaire à l'axe longitudinal (43) de la nacelle et s'éloigne radialement de ce dernier en progressant vers l'aval.

## Patentansprüche

1. Antriebseinheit (1) für ein Flugzeug, umfassend:
- ein Turbostrahltriebwerk (7) in der Art mit Zweikreis,
- eine Gondel (2), die das Turbostrahltriebwerk (7) umgibt, wobei die Gondel eine stromabwärtige Struktur (11) umfasst, die eine externe Struktur (12) umfasst, die mit einer konzentrischen internen Struktur (17), die ein stromabwärtiges Fach (18) des Turbostrahltriebwerks (7) umgibt, einen ringförmigen Strömungskanal (15) definiert, wobei die interne Struktur (17) in der Form von zwei ringförmigen Hälften (19a, 19b) realisiert ist,
- Mittel zum Verschieben (27, 29, 51, 57, 59) und Führen mindestens einer der beiden Hälften (19a, 19b), angepasst, um die Hälfte (19a, 19b) abwechselnd zwischen einer Arbeitsposition, in der die Hälfte (19a, 19b) eine Schale um das stromabwärtige Fach (18) des Turbostrahltriebwerks bildet, und einer Wartungsposition zu verschieben, in der die Hälfte (19a, 19b) das stromabwärtige Fach des Turbostrahltriebwerks mindestens teilweise offen legt, wobei die Mittel zum Verschieben und Führen umfassen:
mindestens ein Schienen-/Gleitschienensystem (27), das für eine Translationsführung der Hälfte abwechselnd zwischen der stromaufwärtigen und stromabwärtigen Seite der Gondel sorgt, und
mindestens eine Kurbelstange (29), die einerseits mit der Hälfte (19a, 19b) und andererseits mit dem Turbostrahltriebwerk (7) verbunden ist,
wobei die Hälfte (19a, 19b) auf dem Schienen-/Gleitschienensystem (27) schwenkbar montiert ist,
wobei die Antriebseinheit **dadurch gekennzeichnet ist, dass** das Schienen-/Gleitschienensystem (27) angepasst ist, um mindestens einen Abschnitt (41) der Hälfte (19a, 19b), durch den die Hälfte auf dem Schienen-/Gleitschienensystem (27) schwenkbar montiert ist, bei einer Verschiebung der Hälfte (19a, 19b) von stromaufwärts nach stromabwärts der Gondel radial im Verhältnis zu einer Längsachse (43) der Gondel zu entfernen, und dadurch, dass die Kurbelstange (29) angepasst ist, um die Hälfte um eine Achse, entlang der sich eine Führungsschiene (37) des Schienen-/Gleitschienensystems (27) erstreckt, zugleich beim Verschieben der Hälfte entlang der Führungsschiene in Drehung zu versetzen.

2. Antriebseinheit (1) nach Anspruch 1, **dadurch gekennzeichnet, dass** die Kurbelstange (29) ein erstes Ende (31) umfasst, das in Kugelgelenkverbindung auf einem unteren Abschnitt (33) der Hälfte (19a, 19b) montiert ist, und ein zweites Ende (35), das auf einem feststehenden Befestigungspunkt (36) des Turbostrahltriebwerks (7) schwenkbar montiert ist.

3. Antriebseinheit (1) nach einem der Ansprüche 1 oder 2, **dadurch gekennzeichnet, dass** die Kurbelstange (29) angepasst ist, um die Hälfte (19a, 19b) in einer Wartungsposition zu stützen.

4. Antriebseinheit (1) nach einem der Ansprüche 1 bis 3, **dadurch gekennzeichnet, dass** das Schienen-/Gleitschienensystem (27) fest mit dem stromabwärtigen Fach (18) des Turbostrahltriebwerks (7) verbunden ist.

5. Antriebseinheit (1) nach einem der Ansprüche 1 bis 4, **dadurch gekennzeichnet, dass** die Achse, entlang der sich die Führungsschiene (37) erstreckt, im Wesentlichen nicht kollinear mit einer Längsachse (43) der Gondel ist.

6. Antriebseinheit (1) nach einem der Ansprüche 1 bis 5, **dadurch gekennzeichnet, dass** die Führungsschiene (37) ein Ende aufweist, das sich in der Nähe eines Aufhängungsmastes (21) befindet, der dazu bestimmt ist, die Antriebseinheit (1) zu stützen.

7. Antriebseinheit (1) nach einem der Ansprüche 1 bis 6, **dadurch gekennzeichnet, dass** die Führungsschiene (37) durch einen Aufhängungsmast (21) gestützt wird, der dazu bestimmt ist, die Antriebseinheit (1) zu stützen.

8. Antriebseinheit (1) nach einem der Ansprüche 1 bis 7, **dadurch gekennzeichnet, dass** das Schienen-/Gleitschienensystem (27) mindestens eine Gleitschiene (39) umfasst, die durch den Abschnitt (41) der Hälfte (19a, 19b) gestützt wird, und angepasst ist, um entlang der Führungsschiene (37) zu gleiten.

9. Antriebseinheit (1) nach Anspruch 8, **dadurch gekennzeichnet, dass** sich der Abschnitt (41) der Hälfte (19a, 19b) in einer stromaufwärtigen oberen Zone der Hälfte befindet.

10. Antriebseinheit (1) nach einem der Ansprüche 1 bis 9, **dadurch gekennzeichnet, dass** der Drehwinkel der Hälfte (19) um die Achse, entlang der sich die Schiene (37) erstreckt, vorzugsweise zwischen 0° und 30° enthalten ist.

11. Antriebseinheit (1) nach einem der Ansprüche 1 bis 10, **dadurch gekennzeichnet, dass** die Mittel zum Verschieben und Führen mindestens einer der beiden Hälften (19a, 19b) ein zweites Schienen-/Gleitschienensystem (51) umfassen, das beinhaltet:
- eine Schiene (53), die fest mit dem stromabwärtigen Fach (18) des Turbostrahltriebwerks (7) verbunden ist, im Wesentlichen diametral gegenüber einem Aufhängungsmast (21), der dazu bestimmt ist, die Antriebseinheit (1) zu stützen, und
- eine beim Aktivieren von Betätigungsmitteln entlang der Schiene (53) translationsbewegliche Gleitschiene (55),
wobei die Gleitschiene (55) Mittel zum Verschieben mindestens einer Kurbelstange (29) stützt, die angepasst ist, um die Hälfte (19a, 19b) beim Aktivieren der Betätigungsmittel um die Führungsschiene (37) des ersten Schienen-/Gleitschienensystems (27) in Drehung zu versetzen.

12. Antriebseinheit (1) nach Anspruch 11, **dadurch gekennzeichnet, dass** die Mittel zum Verschieben mindestens einer Kurbelstange (29) mindestens eine Gegen-Kurbelstange (57, 59) umfassen, wobei das eine ihrer Enden auf der Gleitschiene (55) schwenkbar montiert ist und das andere ihrer Enden auf der Kurbelstange (29) schwenkbar montiert ist.

13. Antriebseinheit (1) nach einem der Ansprüche 11 bis 12, **dadurch gekennzeichnet, dass** das stromabwärtige Fach (18) des Turbostrahltriebwerks (3) mit einem Zubehörgehäuse (67) ausgestattet ist, das zwei Arme (69, 71) umfasst, die ein "V" definieren.

14. Antriebseinheit (1) nach einem der Ansprüche 1 bis 13, **dadurch gekennzeichnet, dass** die Führungsschiene (37) des Schienen-/Gleitschienensystems (27) derart angepasst ist, dass die Achse, entlang der sie sich erstreckt, nicht kollinear mit der Längsachse (43) der Gondel ist und sich radial von dieser entfernt, indem sie nach stromabwärts fortschreitet.

## Claims

1. A propulsion unit (1) for an aircraft comprising:
- a bypass-type turbojet engine (7),
- a nacelle (2) surrounding the turbojet engine (7), said nacelle comprising a downstream structure (11) comprising an outer structure (12) which defines, with a concentric inner structure (17) surrounding a downstream compartment (18) of the turbojet engine (7), a flow annular channel (15), the inner structure (17) being made in the form of two annular half-portions (19a, 19b),
- displacement and guide means for displacing (27, 29, 51, 57, 59) and guiding at least one of the two half-portions (19a, 19b), configured to displace the half-portion (19a, 19b) alternately between a working position in which the half-portion (19a, 19b) forms a shell around the downstream compartment (18) of the turbojet engine, and a maintenance position in which the half-portion (19a, 19b) at least partially uncovers said downstream compartment of the turbojet engine, said displacement and guide means comprising:
at least one rail/guideway system (27) ensuring a translational guidance of the half-portion, alternately between the upstream and the downstream of the nacelle, and
at least one connecting rod (29) connected on the one hand to the half-portion (19a, 19b) and on the other hand to the turbojet engine (7),
the half-portion (19a, 19b) being pivotally mounted on the rail/guideway system (27),
said propulsion unit being **characterized in that** the rail/guideway system (27) is configured to move radially away relatively to a longitudinal axis (43) of the nacelle at least one portion (41) of the half-portion (19a, 19b) by which the half-portion is pivotally mounted on the rail/guideway system (27), during a displacement of the half-portion (19a, 19b) from upstream to downstream of the nacelle, and **in that** said connecting rod (29) is configured to rotatably drive the half-portion about an axis according to which a guide rail (37) of the rail/guideway system (27) extends simultaneously during the displacement of the half-portion along said guide rail.

2. The propulsion unit (1) according to claim 1, **characterized in that** the connecting rod (29) comprises a first end (31) mounted in ball-joint connection on a lower portion (33) of the half-portion (19a, 19b) and a second end (35) pivotally mounted on a fixed attachment point (36) of the turbojet engine (7).

3. The propulsion unit (1) according to any one of claims 1 or 2, **characterized in that** the connecting rod (29) is configured to support the half-portion (19a, 19b) in a maintenance position.

4. The propulsion unit (1) according to any one of claims 1 to 3, **characterized in that** the guide rail of the rail/guideway system (27) is secured to the downstream compartment (18) of the turbojet engine (7).

5. The propulsion unit (1) according to any one of claims 1 to 4, **characterized in that** the axis according to which the guide rail (37) extends is substantially non-collinear with a longitudinal axis (43) of the nacelle.

6. The propulsion unit (1) according to any one of claims 1 to 5, **characterized in that** the guide rail (37) has an end located proximate to a suspension mast (21) intended to support said propulsion unit (1).

7. The propulsion unit (1) according to any one of claims 1 to 6, **characterized in that** the guide rail (37) is supported by a suspension mast (21) intended to support said propulsion unit (1).

8. The propulsion unit (1) according to any one of claims 1 to 7, **characterized in that** the rail/guideway system (27) comprises at least one guideway (39) supported by said portion (41) of the half-portion (19a, 19b) and configured to slide along the guide rail (37).

9. The propulsion unit (1) according to claim 8, **characterized in that** said portion (41) of the half-portion (19a, 19b) is located in an upstream upper area of the half-portion.

10. The propulsion unit (1) according to any one of claims 1 to 9, **characterized in that** the angle of rotation of the half-portion (19) about the axis according to which the rail (37) extends is preferably comprised between 0° and 30°.

11. The propulsion unit (1) according to any one of claims 1 to 10, **characterized in that** said displacement and guide means for displacing and guiding at least one of the two half-portions (19a, 19b) comprise a second rail/guideway system (51) including:
- a rail (53) secured to the downstream compartment (18) of the turbojet engine (7), substantially diametrically opposed to a suspension mast (21) intended to support the propulsion unit (1), and
- a guideway (55) movable in translation along the rail (53) during the activation of actuation means,
the guideway (55) supporting means for displacing at least one said connecting rod (29) configured to rotatably drive the half-portion (19a, 19b) around the guide rail (37) of the first rail/guideway system (27), during the activation of said actuation means.

12. The propulsion unit (1) according to claim 11, **characterized in that** the means for displacing at least one said connecting rod (29) comprise at least one con-connecting rod (57, 59), one end of which is pivotally mounted on the guideway (55) and the other end is pivotally mounted on said connecting rod (29).

13. The propulsion unit (1) according to any one of claims 11 to 12, **characterized in that** the downstream compartment (18) of the turbojet engine (3) is equipped with an accessories case (67) comprising two arms (69, 71) defining a "V".

14. The propulsion unit (1) according to any one of claims 1 to 13, **characterized in that** the guide rail (37) of the rail/guideway system (27) is configured so that the axis according to which it extends is non-collinear with the longitudinal axis (43) of the nacelle and gets away radially from the latter as it progresses downstreams.
